# EUROPEAN PATENT SPECIFICATION

(11) **EP 4 481 542 B1**
(45) Date of publication and mention of the grant of the patent: **25.03.2026**
(21) Application number: 23848918.1
(22) Date of filing: 19.04.2023
(51) Int. Cl.: G06F 3/02, G06F 3/038, G06F 13/38, G06F 3/023, H04W 4/80

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(30) Priority: 04.08.2022 CN 202210934446
(43) Date of publication of application: 25.12.2024
(73) Proprietor: Honor Device Co., Ltd., Shenzhen, Guangdong 518040 (CN)
(72) Inventor: ZHANG, Wujia, Shenzhen, Guangdong 518040 (CN)
(74) Representative: Goddar, Heinz J.
(86) International application number: PCT/CN2023/089126
(87) International publication number: WO 2024/027207

(56) References cited:
- EP-A1- 4 033 792
- WO-A1-2022/030910
- WO-A1-2022/065845
- CN-A- 111 837 378
- CN-A- 113 986 023
- CN-A- 114 245 360
- CN-U- 206 077 396
- US-A1- 2018 020 829
- US-A1- 2023 185 449
- SHULIANG HAN: "Physical layer: data communication (data communication model | information source | information sink | channel | communication method | single", BLOG CSDN, 13 August 2020 (2020-08-13), XP093134650, Retrieved from the Internet <URL:https://blog.csdn.net/shulianghan/article/details/107976437> [retrieved on 20240226]

## Description

This application claims priority to Chinese Patent Application No. 202210934446.6, filed with the China National Intellectual Property Administration on August 4, 2022 and entitled "DATA TRANSMISSION METHOD AND APPARATUS".

### TECHNICAL FIELD

This application relates to the field of communication technologies, and in particular, to a data transmission method and apparatus.

### BACKGROUND

An auxiliary device of a terminal device can establish a communication connection with the terminal device and some auxiliary functions are provided for the terminal device via the auxiliary device. For example, a keyboard may be used as an external keyboard of a tablet computer (PAD). However, data transmission between the auxiliary device and the terminal device needs to be improved.

WO 2022/030910 A1 discloses: At least one processor included in an electronic device can acquire first motion data about the motion of the electronic device through at least one motion sensor, acquire second motion data about a motion of an external device through a connector included in the electronic device, determine, on the basis of the first motion data and the second motion data, the folding angle between the electronic device and the external device connected to the electronic device, and determine, on the basis of the determined folding angle, an input mode that sets whether to display a user interface on a display or whether to block an input signal received through the connector. Various other embodiments identified through the specification are possible.

US 2018/020829 A1 discloses: A wireless keyboard module, portable electronic device and methods for charging and pairing a wireless keyboard module to a portable electronic device are provided herein. According to one embodiment, the wireless keyboard module includes a wired connector configured to electrically connect to a wired connector on a back surface of the portable electronic device when the wireless keyboard module is mounted onto the back surface of the portable electronic device. Upon connecting the wired connectors of the wireless keyboard module and the portable electronic device, the wireless keyboard module is configured to receive a charging signal from the portable electronic device and configured to transmit a pairing code to the portable electronic device across the wired connectors.

### SUMMARY

This application, which is defined by the appended claims, provides a data transmission method and apparatus to improve data transmission between an auxiliary device and a terminal device, reduce costs of the terminal device, and improve universality of the method. To achieve the foregoing objectives, this application provides the following technical solutions.

According to a first aspect, this application provides a data transmission method applied to a terminal device. The terminal device is connected to an auxiliary device through a first interface, a second interface, and a third interface. The method includes: The terminal device supplies power to the auxiliary device through the first interface and the second interface after it is detected that the terminal device is connected to the auxiliary device, wherein the detection is completed by using a Hall sensor disposed in the terminal device and a magnet disposed in the auxiliary device. The terminal device establishes a first transmission channel between a receiver pin of the terminal device and a transmitter pin of the auxiliary device through the third interface. The first transmission channel is a hardware channel from the auxiliary device to the terminal device. The terminal device receives, through the first transmission channel, first data sent by the auxiliary device. The terminal device sends second data to the auxiliary device through a second transmission channel. The second transmission channel is different from the first transmission channel.

In this embodiment, after the terminal device is connected to the auxiliary device through the first interface, the second interface, and the third interface, the terminal device may establish the first transmission channel between the receiver pin of the terminal device and the transmitter pin of the auxiliary device through the third interface. The first transmission channel is a hardware channel formed through pins in the terminal device and the auxiliary device and the third interface, so that the terminal device may establish the first transmission channel by using a general input/output port of a system-level chip, thereby enabling the terminal device to replace a micro control unit with the system-level chip, and reducing costs of the terminal device, for example, reducing costs by about US$2. The terminal device and the auxiliary device can stop switching between the transmitter pin and the receiver pin according to a working state, so that the terminal device and the auxiliary device can omit a state polling and state switching process, and performance requirements for the terminal device and the auxiliary device are lowered, thereby improving universality of the method.

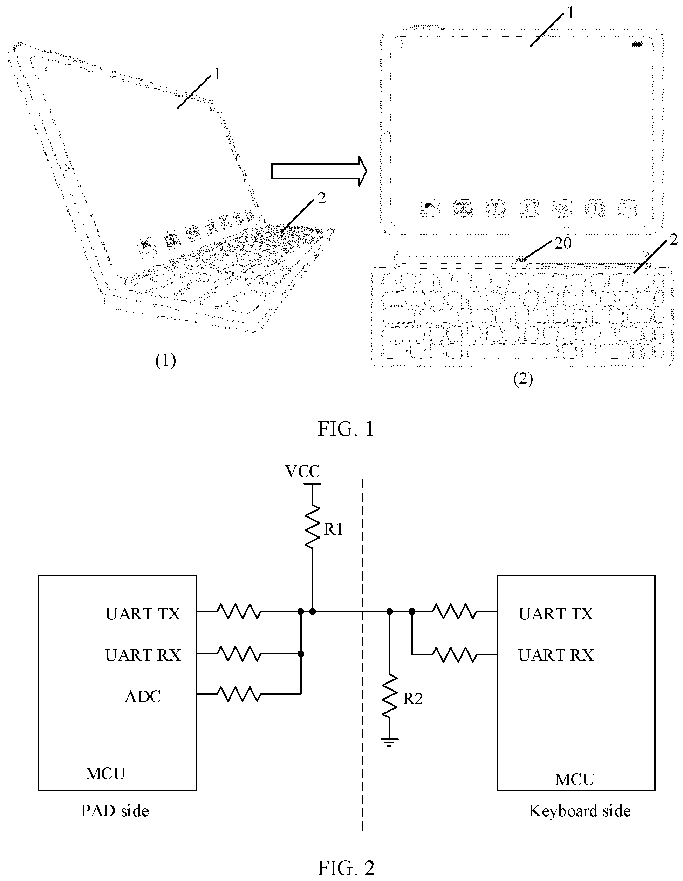

In some examples, the terminal device may be a tablet computer, and the auxiliary device may be a keyboard. The first interface, the second interface, and the third interface are of the same interface type. The first interface, the second interface, and the third interface may be POGO pin interfaces. The first interface, the second interface, and the third interface are disposed on the tablet computer. As shown in FIG. 1, three POGO pin interfaces are provided on the keyboard, and three POGO pin interfaces are also provided on corresponding positions of the tablet computer. The three interfaces are the first interface, the second interface, and the third interface. The keyboard can send at least one of key data and touch data to the tablet computer through the first transmission channel, and the tablet computer can send at least one of firmware upgrade data, key acknowledgement data (ACK), and touch ACK to the keyboard through the second transmission channel. In this example, a transmission rate of the first transmission channel is greater than a transmission rate of the second transmission channel, so that the key data and the touch data can be sent to the tablet computer in time, thereby improving user experience.

In a possible implementation, that the terminal device sends second data to the auxiliary device through a second transmission channel includes: The terminal device sends the second data to the auxiliary device through a short-distance wireless transmission channel. In this embodiment, the first data is transmitted through the hardware channel used as the first transmission channel, and the second data is transmitted through the short-distance wireless transmission channel. Different types of data are transmitted through different transmission channels to implement simplex transmission of the first data from the auxiliary device to the terminal device and simplex transmission of the second data from the terminal device to the auxiliary device. A data transmission requirement of the first data is higher than a data transmission requirement of the second data. For example, the first data requires a low delay and the second data requires a high delay. The first data can be sent to the terminal device in time through the hardware channel, and the terminal device responds to the first data in time, thereby improving user experience. In other words, data transmission requirements of the first data and the second data are different. The terminal device and the auxiliary device can prenegotiate, based on the data transmission requirements of the first data and the second data, that the first data is transmitted through the first transmission channel and the second data is transmitted through the second transmission channel, to meet the data transmission requirements of the first data and the second data.

In a possible implementation, that the terminal device receives, through the first transmission channel, first data sent by the auxiliary device includes: The terminal device receives, through the first transmission channel N times, the first data sent by the auxiliary device. The terminal device is configured to respond to the first data once, and N is a natural number greater than 1. That the terminal device sends second data to the auxiliary device through a second transmission channel includes: The terminal device sends reception acknowledgement data of the first data to the auxiliary device through the short-distance wireless transmission channel once. The reception acknowledgement data is the second data. Bit errors are minimized or eliminated by sending same first data multiple times, and error corrections are implemented by sending the same data multiple times. Although the terminal device receives the same first data multiple times, the terminal device responds to the first data once and feeds back one piece of reception acknowledgement data to the auxiliary device, so that accuracy of the first data is improved without changing the response of the terminal device to the first data.

For example, the terminal device is a tablet computer and the auxiliary device is a keyboard. For a user, if the user performs key press or touch once, the keyboard can send the same key data or touch data to the tablet computer for the user's key press or touch multiple times without the user being aware of this, thereby improving accuracy of the key data or the touch data received by the tablet computer, and improving accuracy of a response of the tablet computer and improving user experience. For example, the keyboard can send the same key data or touch data to the tablet computer through the first transmission channel three times or twice. A quantity of times of sending is limited by a pin transmission capability of the keyboard and the tablet computer.

In a possible implementation, the short-distance wireless transmission channel is a Bluetooth channel or a ZigBee channel, so that the terminal device can send the second data to the auxiliary device by using a Bluetooth technology or a ZigBee technology. Specifically, the terminal device can send the second data to the auxiliary device by using a Bluetooth communication module or ZigBee communication module. The Bluetooth communication module and the ZigBee communication module have low power consumption, thereby ensuring that power consumption may be reduced while the second data is transmitted.

In a possible implementation, the method further includes: The terminal device establishes the second transmission channel between a transmitter pin of the terminal device and a receiver pin of the auxiliary device through a fourth interface. The second transmission channel is a hardware channel from the terminal device to the auxiliary device. That the terminal device receives, through the first transmission channel, first data sent by the auxiliary device includes: The terminal device receives, through the first transmission channel M times, the first data sent by the auxiliary device, and the terminal device receives, through a short-distance wireless transmission channel T times, the first data sent by the auxiliary device. The terminal device is configured to respond to the first data once, M is a natural number greater than 1, and T is a natural number greater than or equal to 1. That the terminal device sends second data to the auxiliary device through a second transmission channel includes: The terminal device sends reception acknowledgement data of the first data to the auxiliary device through the second transmission channel once. The reception acknowledgement data is the second data. The first data can be transmitted through the first transmission channel and the short-distance wireless transmission channel simultaneously, thereby reducing transmission time while bit errors and misoperations are eliminated.

In a possible implementation, the method further includes: The terminal device detects a level generated by a Hall sensor. The Hall sensor is disposed in the terminal device, a distance between the Hall sensor and the first interface or the second interface is less than a preset distance, a magnet is disposed in the auxiliary device, a distance between the magnet and the first interface or the second interface is less than the preset distance, the magnet is configured to generate magnetic force, and the magnetic force is for controlling the level generated by the Hall sensor. If the level generated by the Hall sensor changes from a first level to a second level, it is determined that the terminal device is connected to the auxiliary device. The first level is greater than the second level. If the level generated by the Hall sensor changes from the second level to the first level, it is determined that the terminal device is not connected to the auxiliary device. In this embodiment, the preset distance is provided for arrangement of the Hall sensor and magnet, so that the Hall sensor is arranged near the first interface or the second interface. The preset distance is not limited.

According to a second aspect, this application provides a data transmission method applied to an auxiliary device. The auxiliary device is connected to a terminal device through a fifth interface, a sixth interface, and a seventh interface. The method includes: After it is detected, by the terminal device, that the auxiliary device is connected to the terminal device, the auxiliary device receives, through the fifth interface and the sixth interface, a power supply voltage output by the terminal device wherein the detection is completed by using a Hall sensor disposed in the terminal device and a magnet disposed in the auxiliary device. The auxiliary device establishes a first transmission channel between a receiver pin of the terminal device and a transmitter pin of the auxiliary device through the seventh interface. The first transmission channel is a hardware channel from the auxiliary device to the terminal device. The auxiliary device sends first data to the terminal device through the first transmission channel. The auxiliary device receives, through a second transmission channel, second data sent by the terminal device. The second transmission channel is different from the first transmission channel.

In this embodiment, the first transmission channel is a hardware channel formed through the pins in the terminal device and auxiliary device and the seventh interface, so that the terminal device can establish the first transmission channel by using a general input/output port of the system-level chip, thereby enabling the terminal device to replace a micro control unit with the system-level chip, and reducing costs of the terminal device, for example, reducing costs by about US$2. The terminal device and the auxiliary device can stop switching between the transmitter pin and the receiver pin according to a working state, so that the terminal device and the auxiliary device can omit a state polling and state switching process, and performance requirements for the terminal device and the auxiliary device are lowered, thereby improving universality of the method. The fifth interface, the sixth interface, and the seventh interface are of the same interface type. The fifth interface, the sixth interface, and the seventh interface may be POGO pin interfaces. As shown in FIG. 1, the terminal device is a tablet computer, and the auxiliary device is a keyboard. The fifth interface, the sixth interface, and the seventh interface are the three POGO pin interfaces in FIG. 1.

In a possible implementation, that the auxiliary device receives, through a second transmission channel, second data sent by the terminal device includes: The auxiliary device receives, through a short-distance wireless transmission channel, the second data sent by the terminal device, to implement simplex transmission of the first data from the auxiliary device to the terminal device and simplex transmission of the second data from the terminal device to the auxiliary device.

In a possible implementation, that the auxiliary device sends first data to the terminal device through the first transmission channel includes: The auxiliary device sends the first data to the terminal device through the first transmission channel N times. The terminal device is configured to respond to the first data once, and N is a natural number greater than 1. That the auxiliary device receives, through a second transmission channel, second data sent by the terminal device includes: The auxiliary device receives, through the short-distance wireless transmission channel, reception acknowledgement data of the first data sent by the terminal device. The reception acknowledgement data is the second data, and the reception acknowledgement data is sent once. Bit errors are minimized or eliminated by sending same first data multiple times, and error corrections are implemented by sending the same data multiple times. Although the terminal device receives the same first data multiple times, the terminal device responds to the first data once and feeds back one piece of reception acknowledgement data to the auxiliary device, so that accuracy of the first data is improved without changing the response of the terminal device to the first data.

In a possible implementation, the short-distance wireless transmission channel is a Bluetooth channel or a ZigBee channel. This can reduce power consumption while the second data is transmitted.

In a possible implementation, the method further includes: The auxiliary device establishes a second transmission channel between a transmitter pin of the terminal device and a receiver pin of the auxiliary device through an eighth interface. The second transmission channel is a hardware channel from the terminal device to the auxiliary device. That the auxiliary device sends first data to the terminal device through the first transmission channel includes: The auxiliary device sends the first data to the terminal device through the first transmission channel M times, and the auxiliary device sends the first data to the auxiliary device through a short-distance wireless transmission channel T times. The terminal device is configured to respond to the first data once, M is a natural number greater than 1, and T is a natural number greater than or equal to 1. That the auxiliary device receives, through a second transmission channel, second data sent by the terminal device includes: The auxiliary device receives, through the second transmission channel, reception acknowledgement data of the first data sent by the terminal device. The reception acknowledgement data is the second data. The first data can be transmitted through the first transmission channel and the short-distance wireless transmission channel simultaneously, thereby reducing transmission time while bit errors and misoperations are eliminated.

According to a third aspect, this application provides a terminal device. The terminal device has a first interface, a second interface, and a third interface. The terminal device is connected to an auxiliary device through the first interface, the second interface, and the third interface. The terminal device includes a memory and a processor. The memory is configured to store instructions executable by the processor, and the processor executes the instructions to enable the terminal device to perform the data transmission method in the first aspect.

According to a fourth aspect, this application provides an auxiliary device. The auxiliary device has a fifth interface, a sixth interface, and a seventh interface. The auxiliary device is connected to a terminal device through the fifth interface, the sixth interface, and the seventh interface. The auxiliary device includes a memory and a processor. The memory is configured to store instructions executable by the processor, and the processor executes the instructions to enable the auxiliary device to perform the data transmission method in the second aspect.

According to a fifth aspect, this application provides a data transmission system. The data transmission system includes a terminal device and an auxiliary device. The terminal device has a first interface, a second interface, and a third interface. The auxiliary device has a fifth interface, a sixth interface, and a seventh interface. The first interface is configured to connect to the fifth interface, the second interface is configured to connect to the sixth interface, and the third interface is configured to connect to the seventh interface. The terminal device includes a first memory and a first processor. The first memory is configured to store instructions executable by the first processor, and the first processor executes the instructions to enable the terminal device to perform the data transmission method in the first aspect. The auxiliary device includes a second memory and a second processor. The second memory is configured to store instructions executable by the second processor, and the second processor executes the instructions to enable the auxiliary device to perform the data transmission method in the second aspect.

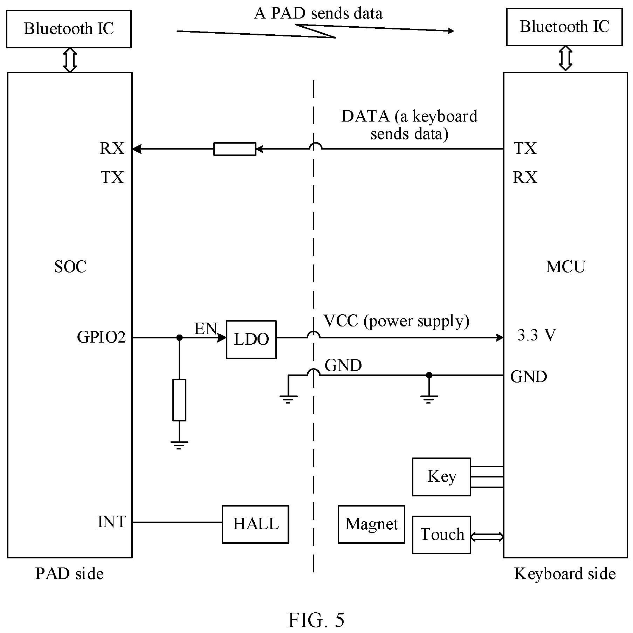

The first interface, the second interface, and the third interface are of the same interface type. The fifth interface, the sixth interface, and the seventh interface are of the same interface type. In a possible implementation, the first interface, the second interface, the third interface, the fifth interface, the sixth interface, and the seventh interface are POGO pin interfaces. The terminal device is a tablet computer, and the auxiliary device is a keyboard. As shown in FIG. 5 below, VCC, GND, and DATD are at a dashed line. The VCC corresponds to the first interface and the fifth interface, the GND corresponds to the second interface and the sixth interface, and the DATA corresponds to the third interface and the seventh interface. A power supply voltage is input into the fifth interface and the sixth interface through the first interface and the second interface, and then power is supplied through the fifth interface and the sixth interface. A first transmission channel is formed between a receiver pin of the terminal device and a transmitter pin of the auxiliary device through the third interface and the seventh interface.

### BRIEF DESCRIPTION OF DRAWINGS

To describe the technical methods in embodiments of this application more clearly, the following briefly describes the accompanying drawings required for describing embodiments.
FIG. 1 is a schematic diagram of a connection between a terminal device and an auxiliary device according to this application;
FIG. 2 is a schematic diagram of communication between a terminal device and an auxiliary device according to this application;
FIG. 3 is a schematic diagram of a hardware architecture of a terminal device according to this application;
FIG. 4 is a schematic diagram of a hardware architecture of an auxiliary device according to this application;
FIG. 5 is another schematic diagram of communication between a terminal device and an auxiliary device according to this application; and
FIG. 6 is another schematic diagram of communication between a terminal device and an auxiliary device according to this application.

### DESCRIPTION OF EMBODIMENTS

The following clearly and completely describes technical solutions in embodiments of this application with reference to the accompanying drawings in embodiments of this application. Terms used in the following embodiments are only intended to describe particular embodiments, and are not intended to limit this application. As used in this specification and the claims of this application, a singular expression form, "one", "a", "the", "foregoing", "the", or "this", is intended to also include "one or more" expression form, unless clearly indicated to the contrary in the context. It should be further understood that, in embodiments of this application, "at least one" and "one or more" means one, two or more. "and/or" describes an association relationship between associated objects and represents that three relationships may exist. For example, A and/or B may represent: only A exists, both A and B exist, and only B exists, where A and B may be singular or plural. The character "/" generally represents an "or" relationship between the associated objects.

Reference to "one embodiment" or "some embodiments" and the like described in this specification means that a specific characteristic, structure or feature described in combination with this embodiment is included in one or more embodiments of this application. Therefore, the statements "in one embodiment", "in some embodiments", "in some other embodiments", "in other embodiments", and the like in the differences in this specification do not necessarily refer to the same embodiment, but mean "one or more but not all embodiments", unless otherwise specially emphasized in other ways. The terms "include", "contain", "have" and their variations mean "including but not limited to", unless otherwise specially emphasized in other ways.

A plurality of involved in embodiments of this application refers to two or more. It should be noted that in descriptions of embodiments of this application, terms such as "first" and "second" are merely used for distinguishing descriptions, and cannot be understood as an indication or implication of relative importance, or an indication or implication of a sequence.

An auxiliary device of a terminal device can provide auxiliary functions for the terminal device. For example, a keyboard may be used as an external keyboard of a PAD to provide an input function for the PAD. FIG. 1 shows a connection between the PAD and the keyboard. A PAD1 is the terminal device, and a keyboard 2 is the auxiliary device of the PAD1. Section (1) of FIG. 1 shows that the keyboard 2 is connected to the PAD1. Section (2) of FIG. 1 shows that the keyboard 2 is separated from the PAD1, for example, a user removes the keyboard 2 from the PAD1. A POGO pin interface (which is also referred to as a POGO pin) 20 is provided on the keyboard 2, as shown in section (2) of FIG. 1. A POGO pin interface (not shown in FIG. 1) is also provided on the PAD1. The PAD1 and the keyboard 2 can be connected through three POGO pin interfaces, two of the three POGO pin interfaces are configured to supply power to the keyboard, and one interface is configured for communication between the PAD and the keyboard. The keyboard in FIG. 1 may further include a touch area that is not shown in FIG. 1.

When the PAD1 and the keyboard 2 are connected through the interfaces, single-wire communication between the PAD and the keyboard can be implemented through the POGO pin interfaces (which may be referred to as POGO pin data transmission). In some examples, after the keyboard is connected to the PAD, universal asynchronous receiver/transmitter (universal asynchronous receiver/transmitter, UART) pins of the PAD and the keyboard are connected through the POGO pin interface, so that data can be transmitted between the PAD and the keyboard through the UART pin and the POGO pin interfaces. As shown in FIG. 2, the UART TX (transmitter) pin, UART RX pin, and an ADC pin of the PAD reuse a first connection line. The UART TX (transmitter) pin and the UART RX pin of the keyboard reuse a second connection line. After the PAD is connected to the POGO pin interface of the keyboard, the first connection line is connected to the second connection line. The TX pin of the PAD is connected to the RX pin of the keyboard through the first connection line and the second connection line. The RX pin of the PAD is connected to the TX pin of the keyboard through the first connection line and the second connection line. A wired transmission channel is formed through the UART pin, the first connection line, the second connection line, and the POGO pin interface. The PAD and the keyboard may perform single-wire communication through the wired transmission channel. In FIG. 2, a VCC pin of the PAD is connected to a ground pin of the keyboard through the first connection line and the second connection line.

When the PAD is connected to the keyboard, a resistor R2 connected between the VCC pin and the ground pin divides a voltage, so that a voltage of a resistor R1 is less than a voltage (VCC) connected to the VCC pin. When the PAD is disconnected from the keyboard (the keyboard is separated from the PAD), the VCC pin of the PAD is suspended, the voltage of the resistor R1 is equal to the VCC. The ADC can obtain the voltage of the resistor R1 connected to the VCC pin, and the ADC pin sends the voltage of the resistor R1 to a microcontroller unit (Microcontroller Unit, MCU) of the PAD. The MUC detects whether the keyboard is connected to the PAD through the voltage of the resistor R1.

The MCU of the PAD and the MCU of the keyboard are configured to control respective working states. The PAD and keyboard are in a receiving state by default. If there is data to send, the receiving state is switched from a sending state. The data sent by the keyboard to the PAD includes key data, touch data, and the like. The data sent by the PAD to the keyboard includes firmware upgrade data, key acknowledgement data (ACK), touch ACK, and the like. A process of the single-wire communication may be as follows: If the MCU of the keyboard detects that the user taps the key or the strikes touch keyboard, the MCU of the keyboard controls the keyboard to be in the sending state and sends the key data or the touch data to the RX pin of the PAD through the TX pin of the keyboard. After the data is sent, the MCU of the keyboard controls the keyboard to be in the receiving state. When the keyboard sends data to the PAD, the PAD is in the receiving state. The PAD sends the upgrade data, the key ACK, or the touch ACK to the keyboard, is switched from the receiving state to the sending state, and sends data to the RX pin of the keyboard through the TX pin of the PAD. For example, after the PAD completes the response based on the key data, the PAD sends the key ACK to the RX pin of the keyboard through the TX pin of the PAD.

When the PAD and the keyboard use the single-wire communication, there are problems: MCU is disposed in the PAD, so that costs are increased. In addition, the PAD and the keyboard is switched between the receiving state and the sending state. When the PAD is in the receiving state, the PAD uses the RX pin and the keyboard uses the TX pin. When the PAD is in the sending state, the PAD uses the TX pin and the keyboard uses the RX pin. This indicates that the PAD and the keyboard can switch the TX pin and the RX pin according to a working state during single-wire communication, thereby improving performance requirements for the PAD and the keyboard, and reducing universality of single-wire communication.

In addition to the communication between the PAD and the keyboard as shown in FIG. 2, the PAD and the keyboard can also use wireless communication. For example, the PAD and the keyboard use short-distance wireless communication to transmit data. In some examples, the PAD and the keyboard can use Bluetooth to transmit data. Costs can be reduced when the PAD transmits data through the wireless communication. For example, the PAD may be provided with a processor that costs less than the MCU. For example, the PAD uses a system on chip (System on Chip, SOC), and the SOC replaces the MCU to reduce costs of the PAD. When the PAD and the keyboard use wireless communication, there is a certain delay in wireless communication. Delay requirements for the key data and the touch data are high. The keyboard needs to send the key data or the touch data to the PAD as soon as possible after obtaining the key data or the touch data. Therefore, it is difficult to meet the high delay requirement of the key data or the touch data by using the wireless communication to transmit the key data or the touch data. This lowers user experience.

This application provides a data transmission method. The data transmission method can comprehensively consider the advantages and disadvantages of the single-wire communication and the wireless communication (such as Bluetooth) with the POGO pin interfaces, and establish at least one wired transmission channel between the terminal device and the auxiliary device of the terminal device. In addition, the terminal device supports wireless communication with the auxiliary device. The terminal device and the auxiliary device can choose, according to a data transmission requirement, to transmit through the wired transmission channel or transmit through the wireless communication, to meet the data transmission requirement of the terminal device and the auxiliary device, thereby improving user experience.

The wired transmission channel may be formed by the pin of the terminal device, the pin of the auxiliary device, the connection lines of the pins, and the interfaces used when the terminal device and the auxiliary device are connected, and is a hardware line formed through the pins and connection lines in the terminal device and the auxiliary device (which may also be referred to as a hardware channel, similar to a wiring on a printed circuit board). In this way, the terminal device may use a general purpose input/output (General Purpose Input Output, GPIO) of the SOC to establish the wired transmission channel, so that the terminal device can replace the MCU with the SOC, thereby reducing costs of the terminal device, for example, reducing costs by about US$2. The terminal device and the auxiliary device can stop switching the TX pin and the RX pin according to a working state, so that the terminal device and the auxiliary device can omit a state polling and state switching process, and performance requirements for the terminal device and the auxiliary device are lowered, thereby improving universality of the method.

In some examples, transmission methods used by the terminal device and the auxiliary device are fixed but different. For example, the terminal device transmits data to the auxiliary device through wireless communication, and the auxiliary device transmits data to the terminal device through a wired transmission channel. In some examples, the terminal device and/or the auxiliary device can adjust the transmission method according to a data transmission requirement of currently transmitted data. For example, if the terminal device is switched from transmitting data having a low delay requirement to transmitting data having a high delay requirement, then the terminal device adjusts from transmitting through wireless communication to transmitting through a wired transmission channel.

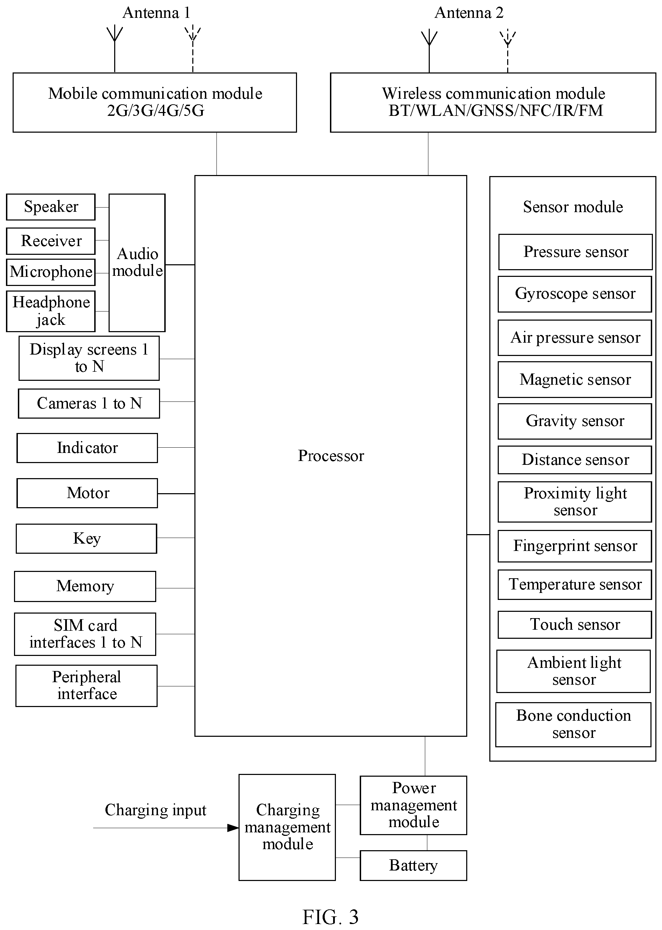

The following is described based on the structure of terminal device and the auxiliary device. FIG. 3 is a schematic diagram of a hardware architecture of a terminal device. The terminal device may be a mobile phone, a smart screen, a tablet computer, a wearable terminal device (such as a watch, a bracelet, and headsets), a vehicle-mounted terminal device, an augmented reality (Augmented Reality, AR) device, a virtual reality (Virtual Reality, VR) device, a personal digital assistant (personal digital assistant, PDA), a projector, and the like.

The terminal device may include: a processor, a memory, a peripheral interface, a charging management module, a power management module, a battery, an antenna 1, an antenna 2, a mobile communication module, a wireless communication module, a sensor module, keys, a motor, an indicator, an audio module, a camera, a display screen, a subscriber identification module (Subscriber Identification Module, SIM) card interface, and the like. The audio module may include a speaker, a receiver, a microphone, a headset jack, and the like. The sensor module may include a pressure sensor, a gyroscope sensor, an air pressure sensor, a magnetic sensor, an acceleration sensor, a distance sensor, a proximity light sensor, a fingerprint sensor, a temperature sensor, a touch sensor, an ambient light sensor, a bone conduction sensor, a gravity sensor, and the like.

It may be understood that an example structure in this embodiment of does not constitute a specific limitation on the terminal device. In some other embodiments, the terminal device may include more or fewer components than those shown in the figure, some components may be combined, some components may be split, or a different component deployment may be used. The components in the figure may be implemented by hardware, software, or a combination of software and hardware.

The processor may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors. For another example, the processor may be an integrated control chip, for example, the processor may be an SOC. The processor is a nerve center and a command center of the terminal device. The controller can generate an operation control signal based on instruction operation code and a timing signal, to complete control of fetching and executing instructions.

The memory may be configured to store computer-executable program code including instructions, may be configured to store data, and the like. The processor executes various functional applications and data processing of the terminal device by running instructions stored in the memory. For example, the processor enables, by running instructions stored in the memory, the terminal device to perform the data communication method provided in this application.

The antenna 1 and the antenna 2 are configured to transmit and receive an electromagnetic wave signal. Each antenna in the terminal device may be configured to cover one or more communication frequency bands. Different antennas may also be reused to improve antenna utilization. For example, the antenna 1 may be reused as a diversity antenna of a wireless local area network. In some other embodiments, the antennas may be used with a tuning switch.

The mobile communication module may provide a solution applied to the terminal device for wireless communication such as 2G/3G/4G/5G. The wireless communication module may provide a solution applied to the terminal device for wireless communication including a wireless local area network (wireless local area network, WLAN (such as a wireless fidelity (wireless fidelity, Wi-Fi) network)), Bluetooth (Bluetooth, BT), a global navigation satellite system (global navigation satellite system, GNSS), frequency modulation (frequency modulation, FM), near field communication (near field communication, NFC), an infrared (infrared, IR) technology, a ZigBee (ZigBee) technology, and the like. In some embodiments, in the terminal device, the antenna 1 is coupled to the mobile communication module, and the antenna 2 is coupled to the wireless communication module, so that the terminal device may communicate with a network and another device by using a wireless communication technology.

The peripheral interface is configured to be externally connected to the auxiliary device of the terminal device. The auxiliary device may also be referred to as an expansion device. For example, an external device includes: a universal serial bus (Universal Serial Bus, USB) interface, a POGO pin interface, and the like. For example, the keyboard may be externally connected through the USB interface or POGO pin interface.

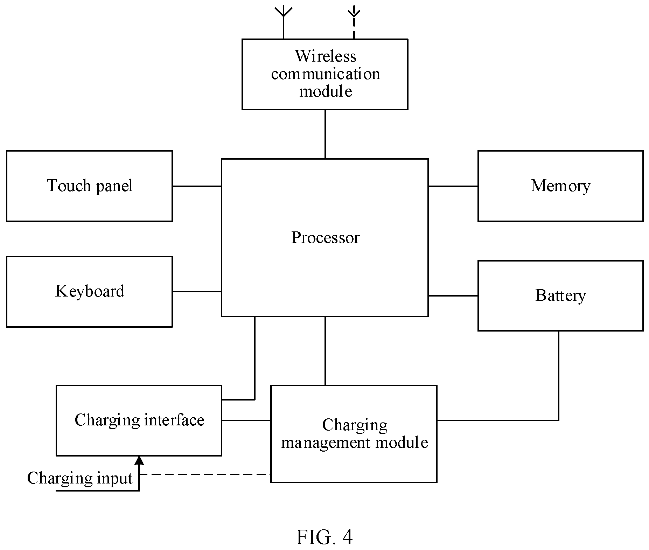

FIG. 4 is a schematic diagram of a hardware architecture of an auxiliary device according to this application. The auxiliary device may include a processor, a memory, a charging interface, a charging management module, a battery, a wireless communication module, and an auxiliary function module. The auxiliary function module is configured to assist a terminal device and provide some functions for the terminal device, such as providing an input function. For example, in the auxiliary device shown in FIG. 4, the auxiliary function module includes a touch panel, a keyboard, and the like. The auxiliary device may be used as an external keyboard of the terminal device. The structure illustrated in this embodiment does not constitute a specific limitation on the auxiliary device. In some other embodiments, the auxiliary device may include more or fewer components than those shown in the figure, some components may be combined, some components may be split, or a different component deployment may be used. The components in the figure may be implemented by hardware, software, or a combination of software and hardware.

The memory may store a Bluetooth address for uniquely identifying the auxiliary device. The memory may further store connection data of the terminal device successfully paired with the auxiliary device before. For example, the connection data of the terminal device may be a Bluetooth address of the terminal device. Based on the connection data, the auxiliary device may be automatically paired with the terminal device without configuring a connection to the terminal device, for example, performing validity verification. The foregoing Bluetooth address may be a media access control (media access control, MAC) address.

The memory may be further configured to store program code, and the processor may execute the foregoing application program code and invoke a related module to implement functions of the auxiliary device in this application. For example, a charging function, a wireless communication function, and the like are implemented. The processor may include one or more processing units. Different processing units may be independent devices, or may be integrated into one or more processors. The processor may be specifically an integrated control chip, or may be formed by a circuit including various active and/or passive components, and the circuit is configured to perform functions of the processor described in this embodiment. In some examples, the processor of the auxiliary device may be a microprocessor.

The wireless communication module may be configured to support data exchange between the auxiliary device and the terminal device for wireless communication including a wireless local area network (wireless local area network, WLAN (such as a wireless fidelity (wireless fidelity, Wi-Fi) network)), Bluetooth (Bluetooth, BT), and a global navigation satellite system (global navigation satellite system, GNSS), frequency modulation (frequency modulation, FM), near field communication (near field communication, NFC), an infrared (infrared, IR) technology, a ZigBee (ZigBee) technology, and the like. In some embodiments, the wireless communication module may be at least one of a Bluetooth communication module and a ZigBee communication module, and may be specifically a Bluetooth chip or a ZigBee chip. The auxiliary device may pair with the Bluetooth chip of the terminal device via the Bluetooth chip and establish a wireless connection, to implement wireless communication between the auxiliary device and the terminal device through the wireless connection.

In some embodiments, the auxiliary device may support wired charging. Specifically, the charging management module may receive charging input from a wired charger through a charging interface. The charging management module may supply power to the auxiliary device while charging the battery. The charging interface may be configured to provide a wired connection for the auxiliary device for charging or communication.

The foregoing touch panel can integrate a touch sensor. The auxiliary device may be connected to the terminal device through the USB interface or the POGO pin interface. After the connection, the terminal device may receive a user's control command and input operation on the terminal device through the touch panel and the keyboard.

After the terminal device is connected to the auxiliary device through the peripheral interface (such as the USB interface or the POGO pin interface), a wired transmission channel is formed between the terminal device and the auxiliary device. This wired transmission channel may be connected between pins of the terminal device and the auxiliary device. For example, the wired transmission channel is connected between an RX pin of the terminal device and a TX pin of the auxiliary device. For another example, the wired transmission channel is connected between a TX pin of the terminal device and an RX pin of the auxiliary device. The terminal device and the auxiliary device can implement simplex communication through the wired transmission channel. To be specific, when the terminal device and the auxiliary device transmit data, one of the terminal device and the auxiliary device sends data to the other through the wired transmission channel.

The terminal device and the auxiliary device may alternatively be connected through the wireless communication module. A wireless transmission channel (which may also be referred to as a wireless communication channel) is formed between the terminal device and the auxiliary device through the wireless communication module. The terminal device and the auxiliary device may exchange data through the wireless transmission channel.

In this embodiment, the terminal device and the auxiliary device have different data transmission requirements. The terminal device and the auxiliary device can determine a transmission channel from the wired transmission channel and the wireless transmission channel according to respective data transmission requirements, to send/transmit data to each other through the determined transmission channel. Transmission channels used by the terminal device and the auxiliary device are different. For example, the terminal device performs transmission through the wireless transmission channel, and the auxiliary device performs transmission through the wired transmission channel. In general, after the terminal device and the auxiliary device determine the transmission channel, the transmission channels used by the terminal device and the auxiliary device may be fixed.

For example, the terminal device and the auxiliary device require different delays. The terminal device requires a higher delay and the auxiliary device requires a lower delay. If a transmission rate of the wired transmission channel is greater than a transmission rate of the wireless transmission channel, then when the terminal device is connected to the auxiliary device, the RX pin of the terminal device may be connected to the TX pin of the auxiliary device, a transmission direction of the wired transmission channel is from the TX pin of the auxiliary device to the RX pin of the terminal device, and the auxiliary device can send data to the terminal device through the wired transmission channel. Because the TX pin of the terminal device is not connected to the wired transmission channel, and there is no wired transmission channel between the TX pin of the terminal device and the RX pin of the auxiliary device, the terminal device cannot send data to the auxiliary device through the wired transmission channel. In this way, the terminal device can send data to the auxiliary device through the wireless transmission channel. The terminal device and the auxiliary device can also determine the transmission channel based on a bit error rate, reliability, and the like. This is not described here again.

For another example, the terminal device and the auxiliary device have different security requirements. The terminal device has a lower security requirement and the auxiliary device has a higher security requirement. Then a transmission direction of the wired transmission channel is from the TX pin of the auxiliary device to the RX pin of the terminal device, and the auxiliary device can send data to the terminal device through the wired transmission channel. The terminal device can send data to the auxiliary device through the wireless transmission channel. For example, the terminal device can send data to the auxiliary device through the Bluetooth or the ZigBee.

An example in which the terminal device is a PAD and the auxiliary device is a keyboard is used. The data sent by the keyboard to the PAD includes key data and touch data. The data sent by the PAD to the keyboard includes firmware upgrade data, key acknowledgement data (ACK), touch ACK, and the like. When the user enters data to the PAD through the keyboard and sends some control commands to the PAD through the keyboard, the keyboard sends the key data or the touch data to the PAD, requiring the key data or the touch data to be sent to the PAD as soon as possible. The PAD can respond in time, so that the key data and the touch data has a high delay requirement, and the firmware upgrade data, the key ACK, and the touch ACK have a low delay requirement. In this way, in the data transmission method provided in this application, the keyboard can implement simplex transmission from the keyboard to the PAD through the wired transmission channel. The PAD can implement simplex transmission from the PAD to the keyboard through the wireless transmission channel, so that the low delay transmission requirement of the keyboard is met and user experience is improved. In this example, the wired transmission channel is denoted as a first transmission channel, and the wireless transmission channel is denoted as a second transmission channel.

The keyboard can send the same key data or touch data to the PAD through the wired transmission channel multiple times. By sending the same key data or touch data multiple times, bit errors are minimized or eliminated, and error corrections are implemented by sending the data multiple times. Although the PAD receives the same key data or touch data multiple times, the PAD responds once and feeds back one piece of ACK to the keyboard. For the user, when the user performs key press or touch once, the keyboard can send the same key data or touch data to the PAD for the user's key press or touch multiple times without user's awareness, thereby improving accuracy of the key data or touch data received by the PAD, and improving accuracy of a response of the PAD and user experience. For example, the keyboard can send the same key data or touch data to the PAD through the wired transmission channel three times or twice. A quantity of times of sending is limited by a pin transmission capability of the keyboard and the PAD. This is not limited in this embodiment.

After the PAD responds to the key data or the touch data, the PAD sends the key ACK or the touch ACK to the keyboard through Bluetooth (a form of wireless transmission channel). In addition, the PAD can alternatively send the firmware upgrade data to the keyboard through Bluetooth. The firmware upgrade data can be sent when the PAD is idle. In some examples, the PAD being idle means that the user does not use the PAD. The PAD sends the firmware upgrade data when the user does not use the PAD. For example, the PAD sends the firmware upgrade data after completing a response based on the key data. In some examples, the PAD sends the firmware upgrade data when the PAD is relatively idle. The relative idleness can be determined based on a processor resource of the PAD, and the like. This is not described again here.

The forms of the wired transmission channel and the wireless transmission channel between the PAD and the keyboard are shown in FIG. 5. The PAD is connected to the keyboard through three POGO pin interfaces. One POGO pin interface (VCC at a dashed line in the figure) is configured to connect a power supply output pin of the PAD (such as GPIO2) and a power supply input pin of the keyboard (such as 3.3 V). One POGO pin interface (GND at a dashed line in the figure) is configured to connect the PAD and a ground pin of the keyboard (such as GND), and the PAD supplies power to the keyboard through the two POGO pin interfaces.

One POGO pin interface (DATA at a dashed line in the figure) is configured to connect the TX pin of the keyboard and the RX pin of the PAD, to connect the TX pin of the keyboard and the RX pin of the PAD, and a hardware circuit is formed through the RX pin of the PAD, a first connection line connected to the RX pin of the PAD, the POGO pin interface, a second connection line connected to the TX pin of the keyboard, and the TX pin of the keyboard. The hardware circuit is used as a wired transmission channel from the keyboard to the PAD. After the user presses the key or touches the Touch (a touch panel of the keyboard), an MCU of the keyboard generates the keyboard data or the touch data, which is sent from the TX pin of the keyboard to the RX pin of the PAD through the wired transmission channel. The keyboard can send the same keyboard data or touch data to the PAD twice or three times. By sending the keyboard data or touch data multiple times, the keyboard data or touch data can be corrected and bit errors can be minimized or eliminated.

After receiving the key data or the touch data through the RX pin, the PAD responds to the key data or the touch data. For example, the user enters a character into the PAD through the keyboard. The user may strike a key on the keyboard that points to the character. The keyboard responds to the user's strike on the key and sends the key data pointing to the character to the PAD through the wired transmission channel. The PAD may restore the character and display the character pointed by the key data after receiving the key data. For another example, the user refreshes a page displayed on the PAD through the touch. The user may use the touch of the keyboard to control a mouse displayed on the PAD to slide to a refresh control of the page. Then the user strikes the touch, and touches the refresh control to refresh the page. The keyboard may monitor the user's operations on the touch, generate the touch data, and send the touch data to the PAD through the wired transmission channel. The PAD may respond to the touch data and refresh the page based on the touch data.

Although the keyboard can send the same key data or touch data to the PAD multiple times, the PAD can respond only once. For example, the user enters characters into the PAD through the keyboard. Although the user strikes a key pointing to the character once, the keyboard can send key data pointing to the character to the PAD multiple times. The PAD can receive the key data pointing to the same character multiple times. The PAD can respond only once, and display the key data once on the PAD. For example, if the user strikes on a character "a" and the keyboard sends key data to the PAD three times, the PAD may display an "a" instead of "aaa".

When the PAD sends the key ACK, touch ACK, and the firmware upgrade data to the keyboard, the PAD can send the key ACK, the touch ACK, and the firmware upgrade data to the keyboard through Bluetooth. The PAD can implement wireless communication with the keyboard via a Bluetooth chip of the PAD (a Bluetooth IC) and a Bluetooth IC of the keyboard. After the PAD is connected to the keyboard through the POGO pin interface, the Bluetooth IC of the PAD may be paired with the Bluetooth IC of the keyboard. After successful pairing, the PAD and the keyboard can communicate through Bluetooth. The PAD can also send the same data to the keyboard through Bluetooth multiple times. For example, the PAD can send the key ACK to the keyboard multiple times.

In some examples, the key ACK and the touch ACK indicate that the PAD has a response based on the key data and the touch data. The keyboard is less concerned about whether the PAD has a response, therefore, the PAD may not send the key ACK and the touch ACK to the keyboard, or only send the key ACK and the touch ACK to the keyboard once. The firmware upgrade data is used to upgrade the keyboard. Accuracy of the firmware upgrade data affects whether the keyboard may be upgraded successfully. Therefore, the firmware upgrade data is important. The PAD can send the firmware upgrade data to the keyboard multiple times, and error corrections can be implemented and bit errors can be minimized by sending the firmware upgrade data multiple times.

In a possible embodiment, two wired transmission channels and one wireless transmission channel are provided between the terminal device and the auxiliary device. The two wired transmission channels are respectively a wired transmission channel formed between the TX pin of the terminal device and the RX pin of the auxiliary device through a POGP pin and a wired transmission channel formed between the RX pin of the terminal device and the TX pin of the auxiliary device through the POGP pin. In other words, the terminal device and the auxiliary device do not reuse the wired transmission channel. In this scenario, the auxiliary device may transmit the same data through a wired transmission channel and a wireless transmission channel, and the terminal device may transmit data through another wired transmission channel. In this scenario, the wired transmission channel between the TX pin of the terminal device and the RX pin of the auxiliary device is the second transmission channel, and the wired transmission channel between the RX pin of the terminal device and the TX pin of the auxiliary device is the first transmission channel.

The PAD and keyboard is still used as an example, the same key data or the same touch data may be sent to the PAD through the wired transmission channel and the wireless transmission channel simultaneously, so that the key data or the touch data may be sent to the PAD through different transmission channels multiple times, to eliminate bit errors. In addition, time can be reduced by sending the same key data or the same touch data through different transmission channels simultaneously. In some examples, the same key data or the same touch data may be sent through different transmission channels different times. For example, the same key data or the same touch data is sent through the wired transmission channel twice and through the wireless transmission channel once. A quantity of times of sending depends on transmission rates of the wired transmission channel and the wireless transmission channel, to reduce transmission time while bit errors and misoperations are eliminated. The wireless transmission channel may be a short-distance wireless transmission channel, such as a Bluetooth channel or a ZigBee channel.

FIG. 5 shows that the keyboard sends data to the PAD through a wired transmission channel, and the PAD sends data to the keyboard through Bluetooth. In a possible embodiment, the PAD can send data to the keyboard through zigbee. Then the PAD and the keyboard are provided with a zigbee communication module. The PAD implements wireless communication with the keyboard through the zigbee communication module. In this way, the PAD can send the key ACK, the touch ACK, the firmware upgrade data, and the like through the zigbee communication module.

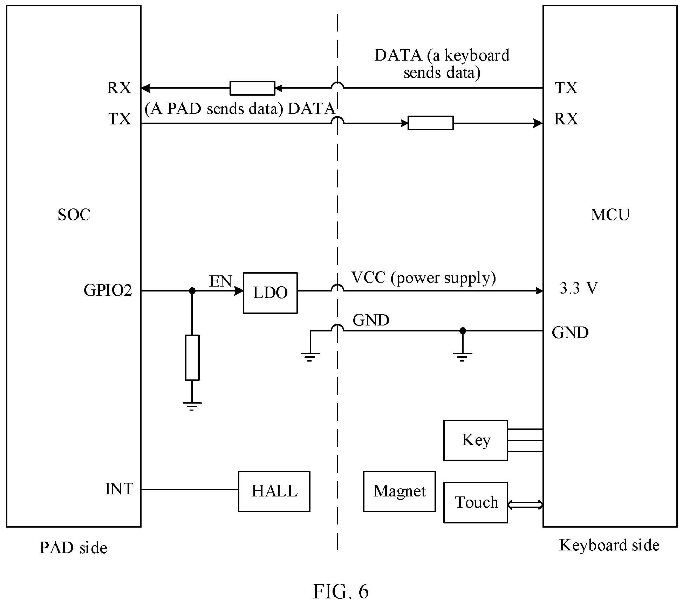

In a possible embodiment, both the keyboard and the PAD have high data transmission requirements, and both the keyboard and the PAD need to send data through wired transmission channels. To replace the MCU with a lower-cost SOC, two wired transmission channels may be established between the keyboard and the PAD. For example, the keyboard is connected to the PAD through four POGO pin interfaces. Two of the four POGO pin interfaces are configured to supply power to the keyboard from the PAD, one of the other two interfaces is configured to connect the RX pin of the PAD and the TX pin of the keyboard, and one of the other two interfaces is configured to connect the TX pin of the PAD and the RX pin of the keyboard, thereby forming two wired transmission channels between the PAD and the keyboard. When the PAD sends data to the keyboard, the PAD sends the data to the TX pin of the PAD, and then transmit the data to the RX pin of the keyboard through the wired transmission channel where the TX pin of the PAD is located, to complete the data transmission from the PAD to the keyboard. When the keyboard sends data to the PAD, the keyboard sends the data to the TX pin of the keyboard, and then transmits the data to the RX pin of the PAD through the wired transmission channel where the TX pin of the keyboard is located, to complete the data transmission from the keyboard to the PAD. The schematic diagram is shown in FIG. 6. Compared to FIG. 5, a wired transmission channel is formed between the TX pin of the PAD and the RX pin of the keyboard, and the PAD can send data to the keyboard through the wired transmission channel. The Bluetooth ICs in the PAD and keyboard may be omitted. Certainly, the PAD and keyboard may retain the Bluetooth ICs and interact with other devices via the Bluetooth ICs, or the Bluetooth ICs may be used as an alternative method of the interaction between the PAD and the keyboard. When any wired transmission channel fails, data is transmitted via Bluetooth IC.

In the foregoing PAD and keyboard shown in FIG. 5 and FIG. 6, a HALL (a Hall sensor) is disposed in the PAD and a magnet is disposed in the keyboard. The HALL and the magnet are placed near the three POGO pin interfaces configured to connect the PAD and the keyboard, a distance between the HALL and a connection line is the same as a distance between the magnet and the connection line, and the connection line is a contact line between the PAD and the keyboard when the PAD is connected to the keyboard. As shown in FIG. 5 and FIG. 6, connection lines are shown as dashed lines. The distance between the HALL and the dashed line is the same as or close to the distance between the magnet to the dashed line. The HALL and the magnet are placed near a GND interface among the three POGO pin interfaces.

The HALL and the magnet are used for disconnection detection. The HALL is connected to the INT (interrupt) pin of the PAD. The PAD sets a default level of the HALL to a high level, then a level connected to the INT pin is a high level. When the keyboard is connected to the PAD, magnetic force detected by the HALL is greater than a threshold, HALL may generate a low level, and the level of the INT pin changes from the high level to the low level. Through the change from the high level to the low level, it is determined that the keyboard is connected to the PAD. When the keyboard is separated from the PAD, the magnetic force detected by the HALL is less than the threshold or equal to the threshold, the HALL may generate a high level, and the level of the INT pin is maintained at the high level, thereby determining that the PAD is not connected to the keyboard. In addition, because the PAD has previously determined that the keyboard is connected, and it is determined that the PAD is not connected to the keyboard based on the level of the INT pin, the PAD can determine that the keyboard is separated from the PAD. In this way, the keyboard disconnection detection is implemented through changes in the level of the HALL.

When it is detected that the keyboard is connected to the PAD through the change in the level of the HALL, the PAD supplies power to the keyboard, specifically through a GPIO2 pin of the PAD. When it is detected that the keyboard is separated from the PAD through the change in the level of the HALL, the PAD stops supplying power to the keyboard, thereby preventing the PAD from supplying power to the keyboard when the VCC interface and the GND interface (VCC and GND at the dashed line) are accidentally connected. For example, the VCC interface is connected to the GND interface through a conductive object, but the connection between the keyboard and the PAD is not detected through the change in the level of the HALL. In this case, the PAD does not supply power to the keyboard.

An example in which the PAD is the terminal device and the keyboard is the auxiliary device is mainly used. The data transmission method provided in embodiments of this application may also be applied to other devices, such as using a detection device as the terminal device, and a printing device as the auxiliary device. After the detection device is connected through a hardware interface (such as POGO pin), a wired transmission channel is formed between the detection device and the printing device through the hardware interface. A transmission direction of the wired transmission channel is from a TX pin of the detection device to an RX pin of the printing device. After the detection device obtains a detection result, the detection result may be transmitted to the printing device through the wired transmission channel, and then printed by the printing device. A response (ACK) of the printing device may be sent to the detection device through the wireless transmission channel. This can also lower performance requirements for the detection device and the printing device.

In addition, this application provides a terminal device. The terminal device has a first interface, a second interface, and a third interface. The terminal device is connected to an auxiliary device through the first interface, the second interface, and the third interface. The terminal device includes a memory and a processor. The memory is configured to store instructions executable by the processor, and the processor executes the instructions to enable the terminal device to perform the data transmission method in the first aspect.

This application provides an auxiliary device. The auxiliary device has a fifth interface, a sixth interface, and a seventh interface. The auxiliary device is connected to a terminal device through the fifth interface, the sixth interface, and the seventh interface. The auxiliary device includes a memory and a processor. The memory is configured to store instructions executable by the processor, and the processor executes the instructions to enable the auxiliary device to perform the data transmission method in the second aspect.

This application provides a data transmission system. The data transmission system includes a terminal device and an auxiliary device. The terminal device has a first interface, a second interface, and a third interface. The auxiliary device has a fifth interface, a sixth interface, and a seventh interface. The first interface is configured to connect to the fifth interface, the second interface is configured to connect to the sixth interface, and the third interface is configured to connect to the seventh interface. The terminal device includes a first memory and a first processor. The first memory is configured to store instructions executable by the first processor, and the first processor executes the instructions to enable the terminal device to perform the data transmission method in the first aspect. The auxiliary device includes a second memory and a second processor. The second memory is configured to store instructions executable by the second processor, and the second processor executes the instructions to enable the auxiliary device to perform the data transmission method in the second aspect.

The first interface, the second interface, and the third interface are of the same interface type. The fifth interface, the sixth interface, and the seventh interface are of the same interface type. In a possible implementation, the first interface, the second interface, the third interface, the fifth interface, the sixth interface, and the seventh interface are POGO pin interfaces. The terminal device is a tablet computer, and the auxiliary device is a keyboard. As shown in FIG. 5 below, VCC, GND, and DATD are at a dashed line. The VCC corresponds to the first interface and the fifth interface, the GND corresponds to the second interface and the sixth interface, and the DATA corresponds to the third interface and the seventh interface. A power supply voltage is input into the fifth interface and the sixth interface through the first interface and the second interface, and then power is supplied through the fifth interface and the sixth interface. A first transmission channel is formed between a receiver pin of the terminal device and a transmitter pin of the auxiliary device through the third interface and the seventh interface.

This application provides a computer-readable storage medium. The computer-readable storage medium stores a computer program, and when the computer program is executed by a processor, the processor is enabled to perform the foregoing data transmission method.

This application provides a data transmission apparatus applied to a terminal device. The terminal device is connected to an auxiliary device through a first interface, a second interface, and a third interface. The apparatus includes: a detection module, a power supply module, a channel establishment module, and a transceiver module. The detection module is configured to detect that the terminal device is connected to the auxiliary device, and trigger the power supply module to supply, through the first interface and the second interface, power to the auxiliary device. The channel establishment module is configured to establish a first transmission channel between a receiver pin of the terminal device and a transmitter pin of the auxiliary device through the third interface. The first transmission channel is a hardware channel from the auxiliary device to the terminal device. The transceiver module is configured to receive, through the first transmission channel, first data sent by the auxiliary device, and send second data to the auxiliary device through a second transmission channel. The second transmission channel is different from the first transmission channel.

In a possible implementation, the transceiver module is configured to send the second data to the auxiliary device through a short-distance wireless transmission channel.

In a possible implementation, the transceiver module is configured to receive, through the first transmission channel N times, the first data sent by the auxiliary device. The terminal device is configured to respond to the first data once, and N is a natural number greater than 1. The transceiver module is configured to send reception acknowledgement data of the first data to the auxiliary device through the short-distance wireless transmission channel once. The reception acknowledgement data is the second data.

In a possible implementation, the short-distance wireless transmission channel is a Bluetooth channel or a ZigBee channel.

In a possible implementation, the channel establishment module is further configured to establish the second transmission channel between a transmitter pin of the terminal device and a receiver pin of the auxiliary device through a fourth interface of the terminal device. The second transmission channel is a hardware channel from the terminal device to the auxiliary device. The transceiver module is configured to receive, through the first transmission channel M times, the first data sent by the auxiliary device, and receive, through a short-distance wireless transmission channel T times, the first data sent by the auxiliary device. The terminal device is configured to respond to the first data once, M is a natural number greater than 1, and T is a natural number greater than or equal to 1. The transceiver module is configured to send reception acknowledgement data of the first data to the auxiliary device through the second transmission channel once. The reception acknowledgement data is the second data.

In a possible implementation, the detection module is configured to detect a level generated by a Hall sensor. The Hall sensor is disposed in the terminal device, a distance between the Hall sensor and the first interface or the second interface is less than a preset distance, a magnet is disposed in the auxiliary device, a distance between the magnet and the first interface or the second interface is less than the preset distance, the magnet is configured to generate magnetic force, and the magnetic force is for controlling the level generated by the Hall sensor. If the level generated by the Hall sensor changes from a first level to a second level, it is determined that the auxiliary device is connected. The first level is greater than the second level. If the level generated by the Hall sensor changes from the second level to the first level, it is determined that the auxiliary device is not connected.

This application provides a data transmission apparatus applied to an auxiliary device. The auxiliary device is connected to a terminal device through a fifth interface, a sixth interface, and a seventh interface. The apparatus includes: a power supply module, an establishment module, and a data transceiver module. The power supply module is configured to receive, after the auxiliary device is connected to the terminal device, a power supply voltage output by the terminal device through the fifth interface and the sixth interface. The establishment module is configured to establish a first transmission channel between a receiver pin of the terminal device and a transmitter pin of the auxiliary device through the seventh interface. The first transmission channel is a hardware channel from the auxiliary device to the terminal device. The data transceiver module is configured to send first data to the terminal device through the first transmission channel, and receive, through a second transmission channel, second data sent by the terminal device. The second transmission channel is different from the first transmission channel.

In a possible implementation, the data transceiver module is configured to receive, through a short-distance wireless transmission channel, the second data sent by the terminal device.

In a possible implementation, the data transceiver module is configured to: send the first data to the terminal device through the first transmission channel N times, where the terminal device is configured to respond to the first data once, and N is a natural number greater than 1; and receive, through the short-distance wireless transmission channel, reception acknowledgement data of the first data sent by the terminal device, where the reception acknowledgement data is the second data, and the reception acknowledgement data is sent once.

In a possible implementation, the short-distance wireless transmission channel is a Bluetooth channel or a ZigBee channel.

In a possible implementation, the establishment module is configured to establish the second transmission channel between a transmitter pin of the terminal device and a receiver pin of the auxiliary device through an eighth interface of the auxiliary device. The second transmission channel is a hardware channel from the terminal device to the auxiliary device. The data transceiver module is configured to send the first data to the terminal device through the first transmission channel M times, and the auxiliary device sends the first data to the auxiliary device through a short-distance wireless transmission channel T times. The terminal device is configured to respond to the first data once, M is a natural number greater than 1, and T is a natural number greater than or equal to 1. The data transceiver module is configured to receive, through the second transmission channel, reception acknowledgement data of the first data sent by the terminal device. The reception acknowledgement data is the second data.

## Claims

1. A data transmission method, applied to a terminal device, wherein the terminal device is connected to an auxiliary device through a first interface, a second interface, and a third interface, and the method comprises:
supplying, by the terminal device, power to the auxiliary device through the first interface and the second interface after it is detected that the terminal device is connected to the auxiliary device, wherein the detection is completed by using a Hall sensor disposed in the terminal device and a magnet disposed in the auxiliary device;
establishing, by the terminal device, a first transmission channel between a receiver pin of the terminal device and a transmitter pin of the auxiliary device through the third interface, wherein the first transmission channel is a hardware channel from the auxiliary device to the terminal device;
receiving, by the terminal device through the first transmission channel, first data sent by the auxiliary device; and
sending, by the terminal device, second data to the auxiliary device through a second transmission channel, to acknowledge reception of the first data wherein the second transmission channel is different from the first transmission channel.

2. The method according to claim 1, wherein the sending, by the terminal device, second data to the auxiliary device through a second transmission channel comprises: sending, by the terminal device, the second data to the auxiliary device through a short-distance wireless transmission channel.

3. The method according to claim 1 or 2, wherein the receiving, by the terminal device through the first transmission channel, first data sent by the auxiliary device comprises: receiving, by the terminal device through the first transmission channel N times, the first data sent by the auxiliary device, wherein the terminal device is configured to respond to the first data once, and N is a natural number greater than 1; and
the sending, by the terminal device, second data to the auxiliary device through a second transmission channel comprises: sending, by the terminal device, reception acknowledgement data of the first data to the auxiliary device through the short-distance wireless transmission channel once, wherein the reception acknowledgement data is the second data.

4. The method according to claim 3, wherein the short-distance wireless transmission channel is a Bluetooth channel or a ZigBee channel.

5. The method according to claim 1, wherein the method further comprises: establishing, by the terminal device, the second transmission channel between a transmitter pin of the terminal device and a receiver pin of the auxiliary device through a fourth interface, wherein the second transmission channel is a hardware channel from the terminal device to the auxiliary device;
the receiving, by the terminal device through the first transmission channel, first data sent by the auxiliary device comprises: receiving, by the terminal device through the first transmission channel M times, the first data sent by the auxiliary device, and receiving, by the terminal device through a short-distance wireless transmission channel T times, the first data sent by the auxiliary device, wherein the terminal device is configured to respond to the first data once, M is a natural number greater than 1, and T is a natural number greater than or equal to 1; and
the sending, by the terminal device, second data to the auxiliary device through a second transmission channel comprises: sending, by the terminal device, reception acknowledgement data of the first data to the auxiliary device through the second transmission channel once, wherein the reception acknowledgement data is the second data.

6. The method according to any one of claims 1 to 5, wherein the method further comprises:
detecting, by the terminal device, a level generated by a Hall sensor, wherein the Hall sensor is disposed in the terminal device, a distance between the Hall sensor and the first interface or the second interface is less than a preset distance, a magnet is disposed in the auxiliary device, a distance between the magnet and the first interface or the second interface is less than the preset distance, the magnet is configured to generate magnetic force, and the magnetic force is for controlling the level generated by the Hall sensor;
if the level generated by the Hall sensor changes from a first level to a second level, determining that the terminal device is connected to the auxiliary device, wherein the first level is greater than the second level; and
if the level generated by the Hall sensor changes from the second level to the first level, determining that the terminal device is not connected to the auxiliary device.

7. A data transmission method, applied to an auxiliary device, wherein the auxiliary device is connected to a terminal device through a fifth interface, a sixth interface, and a seventh interface, and the method comprises:
after it is detected, by the terminal device, that the auxiliary device is connected to the terminal device, receiving, by the auxiliary device through the fifth interface and the sixth interface, a power supply voltage output by the terminal device, wherein the detection is completed by using a Hall sensor disposed in the terminal device and a magnet disposed in the auxiliary device;
establishing, by the auxiliary device, a first transmission channel between a receiver pin of the terminal device and a transmitter pin of the auxiliary device through the seventh interface, wherein the first transmission channel is a hardware channel from the auxiliary device to the terminal device;
sending, by the auxiliary device, first data to the terminal device through the first transmission channel; and
receiving, by the auxiliary device through a second transmission channel, second data sent by the terminal device to acknowledge reception of the first data, wherein the second transmission channel is different from the first transmission channel.

8. The method according to claim 7, wherein the receiving, by the auxiliary device through a second transmission channel, second data sent by the terminal device comprises: receiving, by the auxiliary device through a short-distance wireless transmission channel, the second data sent by the terminal device.

9. The method according to claim 7 or 8, wherein the sending, by the auxiliary device, first data to the terminal device through the first transmission channel comprises: sending, by the auxiliary device, the first data to the terminal device through the first transmission channel N times, wherein the terminal device is configured to respond to the first data once, and N is a natural number greater than 1; and
the receiving, by the auxiliary device through a second transmission channel, second data sent by the terminal device comprises: receiving, by the auxiliary device through the short-distance wireless transmission channel, reception acknowledgement data of the first data sent by the terminal device, wherein the reception acknowledgement data is the second data, and the reception acknowledgement data is sent once.

10. The method according to claim 9, wherein the short-distance wireless transmission channel is a Bluetooth channel or a ZigBee channel.

11. The method according to claim 7, wherein the method further comprises: establishing, by the auxiliary device, the second transmission channel between a transmitter pin of the terminal device and a receiver pin of the auxiliary device through an eighth interface, wherein the second transmission channel is a hardware channel from the terminal device to the auxiliary device;
the sending, by the auxiliary device, first data to the terminal device through the first transmission channel comprises: sending, by the auxiliary device, the first data to the terminal device through the first transmission channel M times, and sending, by the auxiliary device, the first data to the auxiliary device through a short-distance wireless transmission channel T times, wherein the terminal device is configured to respond to the first data once, M is a natural number greater than 1, and T is a natural number greater than or equal to 1; and
the receiving, by the auxiliary device through a second transmission channel, second data sent by the terminal device comprises: receiving, by the auxiliary device through the second transmission channel, reception acknowledgement data of the first data sent by the terminal device, wherein the reception acknowledgement data is the second data.

12. A terminal device, having a first interface, a second interface, and a third interface, wherein the terminal device is connected to an auxiliary device through the first interface, the second interface, and the third interface; and
the terminal device comprises a memory and a processor, wherein the memory is configured to store instructions executable by the processor, and the processor executes the instructions to enable the terminal device to perform the data transmission method according to any one of claims 1 to 6.

13. A auxiliary device, having a fifth interface, a sixth interface, and a seventh interface, wherein the auxiliary device is connected to a terminal device through the fifth interface, the sixth interface, and the seventh interface; and
the auxiliary device comprises a memory and a processor, wherein the memory is configured to store instructions executable by the processor, and the processor executes the instructions to enable the auxiliary device to perform the data transmission method according to any one of claims 7 to 11.

14. A data transmission system, comprising a terminal device and an auxiliary device, wherein the terminal device has a first interface, a second interface, and a third interface, and the auxiliary device has a fifth interface, a sixth interface, and a seventh interface;
the first interface is configured to connect to the fifth interface, the second interface is configured to connect to the sixth interface, and the third interface is configured to connect to the seventh interface;
the terminal device comprises a first memory and a first processor, the first memory is configured to store instructions executable by the first processor, and the first processor executes the instructions to enable the terminal device to perform the data transmission method according to any one of claims 1 to 6; and
the auxiliary device comprises a second memory and a second processor, the second memory is configured to store instructions executable by the second processor, and the second processor executes the instructions to enable the auxiliary device to perform the data transmission method according to any one of claims 7 to 11.

15. The data transmission system according to claim 14, wherein the first interface, the second interface, the third interface, the fifth interface, the sixth interface, and the seventh interface are POGO pin interfaces, the terminal device is a tablet computer, and the auxiliary device is a keyboard.

## Patentansprüche

1. Datenübertragungsverfahren, angewandt auf ein Endgerät, wobei das Endgerät mit einem Zusatzgerät über eine erste Schnittstelle, eine zweite Schnittstelle und eine dritte Schnittstelle verbunden ist und das Verfahren Folgendes umfasst:
Versorgen des Zusatzgeräts mit Strom durch das Endgerät über die erste Schnittstelle und die zweite Schnittstelle, nachdem detektiert wurde, dass das Endgerät mit dem Zusatzgerät verbunden ist, wobei die Detektion unter Verwendung eines in dem Endgerät angeordneten Hall-Sensors und eines in dem Zusatzgerät angeordneten Magneten abgeschlossen wird;
Aufbauen eines ersten Übertragungskanals durch das Endgerät zwischen einem Empfänger-Pin des Endgeräts und einem Sender-Pin des Zusatzgeräts über die dritte Schnittstelle, wobei der erste Übertragungskanal ein Hardware-Kanal von dem Zusatzgerät zu dem Endgerät ist;
Empfangen von durch das Zusatzgerät gesendeten ersten Daten durch das Endgerät über den ersten Übertragungskanal; und
Senden von zweiten Daten durch das Endgerät an das Zusatzgerät über einen zweiten Übertragungskanal, um den Empfang der ersten Daten zu bestätigen, wobei der zweite Übertragungskanal von dem ersten Übertragungskanal verschieden ist.

2. Verfahren nach Anspruch 1, wobei das Senden der zweiten Daten durch das Endgerät an das Zusatzgerät über einen zweiten Übertragungskanal Folgendes umfasst: Senden der zweiten Daten durch das Endgerät an das Zusatzgerät über einen drahtlosen Kurzstrecken-Übertragungskanal.

3. Verfahren nach Anspruch 1 oder 2, wobei das Empfangen der durch das Zusatzgerät gesendeten ersten Daten durch das Endgerät über den ersten Übertragungskanal Folgendes umfasst: N-maliges Empfangen der durch das Zusatzgerät gesendeten ersten Daten durch das Endgerät über den ersten Übertragungskanal, wobei das Endgerät dazu konfiguriert ist, einmal auf die ersten Daten zu reagieren, und N eine natürliche Zahl größer als 1 ist; und
das Senden der zweiten Daten durch das Endgerät an das Zusatzgerät über einen zweiten Übertragungskanal Folgendes umfasst: einmaliges Senden von Empfangsbestätigungsdaten der ersten Daten durch das Endgerät an das Zusatzgerät über den drahtlosen Kurzstrecken-Übertragungskanal, wobei die Empfangsbestätigungsdaten die zweiten Daten sind.

4. Verfahren nach Anspruch 3, wobei der drahtlose Kurzstrecken-Übertragungskanal ein Bluetooth-Kanal oder ein ZigBee-Kanal ist.

5. Verfahren nach Anspruch 1, wobei das Verfahren ferner umfasst: Aufbauen, durch das Endgerät, des zweiten Übertragungskanals zwischen einem Sender-Pin des Endgeräts und einem Empfänger-Pin des Hilfsgeräts über eine vierte Schnittstelle, wobei der zweite Übertragungskanal ein Hardware-Kanal von dem Endgerät zu dem Hilfsgerät ist;
das Empfangen, durch das Endgerät über den ersten Übertragungskanal, von ersten Daten, die von dem Hilfsgerät gesendet werden, umfasst: M-maliges Empfangen, durch das Endgerät über den ersten Übertragungskanal, der ersten Daten, die von dem Hilfsgerät gesendet werden, und T-maliges Empfangen, durch das Endgerät über einen drahtlosen Kurzstrecken-Übertragungskanal, der ersten Daten, die von dem Hilfsgerät gesendet werden, wobei das Endgerät dazu konfiguriert ist, einmal auf die ersten Daten zu reagieren, M eine natürliche Zahl größer als 1 ist und T eine natürliche Zahl größer als oder gleich 1 ist; und
das Senden, durch das Endgerät, von zweiten Daten an das Hilfsgerät über einen zweiten Übertragungskanal umfasst: einmaliges Senden, durch das Endgerät, von Empfangsbestätigungsdaten der ersten Daten an das Hilfsgerät über den zweiten Übertragungskanal, wobei die Empfangsbestätigungsdaten die zweiten Daten sind.

6. Verfahren nach einem der Ansprüche 1 bis 5, wobei das Verfahren ferner umfasst:
Erfassen, durch das Endgerät, eines von einem Hall-Sensor erzeugten Pegels, wobei der Hall-Sensor in dem Endgerät angeordnet ist, ein Abstand zwischen dem Hall-Sensor und der ersten Schnittstelle oder der zweiten Schnittstelle geringer als ein voreingestellter Abstand ist, ein Magnet in dem Hilfsgerät angeordnet ist, ein Abstand zwischen dem Magneten und der ersten Schnittstelle oder der zweiten Schnittstelle geringer als der voreingestellte Abstand ist, der Magnet dazu konfiguriert ist, eine Magnetkraft zu erzeugen, und die Magnetkraft zum Steuern des von dem Hall-Sensor erzeugten Pegels dient;
wenn sich der von dem Hall-Sensor erzeugte Pegel von einem ersten Pegel zu einem zweiten Pegel ändert, Bestimmen, dass das Endgerät mit dem Hilfsgerät verbunden ist, wobei der erste Pegel größer als der zweite Pegel ist; und
wenn sich der von dem Hall-Sensor erzeugte Pegel von dem zweiten Pegel zu dem ersten Pegel ändert, Bestimmen, dass das Endgerät nicht mit dem Hilfsgerät verbunden ist.

7. Datenübertragungsverfahren, angewandt auf ein Hilfsgerät, wobei das Hilfsgerät mit einem Endgerät über eine fünfte Schnittstelle, eine sechste Schnittstelle und eine siebte Schnittstelle verbunden ist und das Verfahren umfasst:
nachdem durch das Endgerät erkannt wurde, dass das Zusatzgerät mit dem Endgerät verbunden ist, Empfangen, durch das Zusatzgerät über die fünfte Schnittstelle und die sechste Schnittstelle, einer durch das Endgerät ausgegebenen Versorgungsspannung, wobei die Erkennung unter Verwendung eines im Endgerät angeordneten Hallsensors und eines im Zusatzgerät angeordneten Magneten abgeschlossen wird;
Aufbauen, durch das Zusatzgerät, eines ersten Übertragungskanals zwischen einem Empfänger-Pin des Endgeräts und einem Sender-Pin des Zusatzgeräts über die siebte Schnittstelle, wobei der erste Übertragungskanal ein Hardware-Kanal vom Zusatzgerät zum Endgerät ist;
Senden, durch das Zusatzgerät, erster Daten an das Endgerät über den ersten Übertragungskanal; und
Empfangen, durch das Zusatzgerät über einen zweiten Übertragungskanal, zweiter Daten, die vom Endgerät gesendet werden, um den Empfang der ersten Daten zu bestätigen, wobei sich der zweite Übertragungskanal vom ersten Übertragungskanal unterscheidet.

8. Verfahren nach Anspruch 7, wobei das Empfangen, durch das Zusatzgerät über einen zweiten Übertragungskanal, zweiter vom Endgerät gesendeter Daten umfasst: Empfangen, durch das Zusatzgerät über einen drahtlosen Kurzstrecken-Übertragungskanal, der vom Endgerät gesendeten zweiten Daten.

9. Verfahren nach Anspruch 7 oder 8, wobei das Senden, durch das Zusatzgerät, erster Daten an das Endgerät über den ersten Übertragungskanal umfasst: N-maliges Senden, durch das Zusatzgerät, der ersten Daten an das Endgerät über den ersten Übertragungskanal, wobei das Endgerät konfiguriert ist, einmal auf die ersten Daten zu reagieren, und N eine natürliche Zahl größer als 1 ist; und
das Empfangen, durch das Zusatzgerät über einen zweiten Übertragungskanal, zweiter vom Endgerät gesendeter Daten umfasst: Empfangen, durch das Zusatzgerät über den drahtlosen Kurzstrecken-Übertragungskanal, von Empfangsbestätigungsdaten der ersten vom Endgerät gesendeten Daten, wobei die Empfangsbestätigungsdaten die zweiten Daten sind und die Empfangsbestätigungsdaten einmal gesendet werden.

10. Verfahren nach Anspruch 9, wobei der drahtlose Kurzstrecken-Übertragungskanal ein Bluetooth-Kanal oder ein ZigBee-Kanal ist.

11. Verfahren nach Anspruch 7, wobei das Verfahren ferner umfasst: Aufbauen, durch das Zusatzgerät, des zweiten Übertragungskanals zwischen einem Sender-Pin des Endgeräts und einem Empfänger-Pin des Zusatzgeräts über eine achte Schnittstelle, wobei der zweite Übertragungskanal ein Hardware-Kanal vom Endgerät zum Zusatzgerät ist;
das Senden, durch das Hilfsgerät, von ersten Daten an das Endgerät über den ersten Übertragungskanal umfasst: Senden, durch das Hilfsgerät, der ersten Daten an das Endgerät über den ersten Übertragungskanal M-mal, und Senden, durch das Hilfsgerät, der ersten Daten an das Hilfsgerät über einen Kurzstrecken-Funkübertragungskanal T-mal, wobei das Endgerät dazu konfiguriert ist, auf die ersten Daten einmal zu antworten, M eine natürliche Zahl größer als 1 ist und T eine natürliche Zahl größer als oder gleich 1 ist; und
das Empfangen, durch das Hilfsgerät über einen zweiten Übertragungskanal, von durch das Endgerät gesendeten zweiten Daten umfasst: Empfangen, durch das Hilfsgerät über den zweiten Übertragungskanal, von Empfangsbestätigungsdaten der durch das Endgerät gesendeten ersten Daten, wobei die Empfangsbestätigungsdaten die zweiten Daten sind.

12. Ein Endgerät mit einer ersten Schnittstelle, einer zweiten Schnittstelle und einer dritten Schnittstelle, wobei das Endgerät mit einem Hilfsgerät über die erste Schnittstelle, die zweite Schnittstelle und die dritte Schnittstelle verbunden ist; und
das Endgerät umfasst einen Speicher und einen Prozessor, wobei der Speicher dazu konfiguriert ist, durch den Prozessor ausführbare Anweisungen zu speichern, und der Prozessor die Anweisungen ausführt, um das Endgerät zu befähigen, das Datenübertragungsverfahren nach einem der Ansprüche 1 bis 6 durchzuführen.

13. Ein Hilfsgerät mit einer fünften Schnittstelle, einer sechsten Schnittstelle und einer siebten Schnittstelle, wobei das Hilfsgerät mit einem Endgerät über die fünfte Schnittstelle, die sechste Schnittstelle und die siebte Schnittstelle verbunden ist; und
das Hilfsgerät umfasst einen Speicher und einen Prozessor, wobei der Speicher dazu konfiguriert ist, durch den Prozessor ausführbare Anweisungen zu speichern, und der Prozessor die Anweisungen ausführt, um das Hilfsgerät zu befähigen, das Datenübertragungsverfahren nach einem der Ansprüche 7 bis 11 durchzuführen.

14. Ein Datenübertragungssystem, umfassend ein Endgerät und ein Hilfsgerät, wobei das Endgerät eine erste Schnittstelle, eine zweite Schnittstelle und eine dritte Schnittstelle aufweist und das Hilfsgerät eine fünfte Schnittstelle, eine sechste Schnittstelle und eine siebte Schnittstelle aufweist;
die erste Schnittstelle ist dazu konfiguriert, mit der fünften Schnittstelle verbunden zu werden, die zweite Schnittstelle ist dazu konfiguriert, mit der sechsten Schnittstelle verbunden zu werden, und die dritte Schnittstelle ist dazu konfiguriert, mit der siebten Schnittstelle verbunden zu werden;
das Endgerät umfasst einen ersten Speicher und einen ersten Prozessor, der erste Speicher ist dazu konfiguriert, durch den ersten Prozessor ausführbare Anweisungen zu speichern, und der erste Prozessor führt die Anweisungen aus, um das Endgerät zu befähigen, das Datenübertragungsverfahren nach einem der Ansprüche 1 bis 6 durchzuführen; und
das Hilfsgerät umfasst einen zweiten Speicher und einen zweiten Prozessor, wobei der zweite Speicher dazu konfiguriert ist, Befehle zu speichern, die durch den zweiten Prozessor ausführbar sind, und der zweite Prozessor die Befehle ausführt, um das Hilfsgerät zu befähigen, das Datenübertragungsverfahren nach einem der Ansprüche 7 bis 11 durchzuführen.

15. Das Datenübertragungssystem nach Anspruch 14, wobei die erste Schnittstelle, die zweite Schnittstelle, die dritte Schnittstelle, die fünfte Schnittstelle, die sechste Schnittstelle und die siebte Schnittstelle POGO-Pin-Schnittstellen sind, das Endgerät ein Tablet-Computer ist und das Hilfsgerät eine Tastatur ist.

## Revendications

1. Procédé de transmission de données, appliqué à un dispositif terminal, dans lequel le dispositif terminal est connecté à un dispositif auxiliaire via une première interface, une deuxième interface et une troisième interface, et le procédé comprend :
la fourniture, par le dispositif terminal, d'une alimentation au dispositif auxiliaire via la première interface et la deuxième interface après qu'il a été détecté que le dispositif terminal est connecté au dispositif auxiliaire, dans lequel la détection est effectuée à l'aide d'un capteur à effet Hall disposé dans le dispositif terminal et d'un aimant disposé dans le dispositif auxiliaire ;
l'établissement, par le dispositif terminal, d'un premier canal de transmission entre une broche de réception du dispositif terminal et une broche de transmission du dispositif auxiliaire via la troisième interface, dans lequel le premier canal de transmission est un canal matériel allant du dispositif auxiliaire vers le dispositif terminal ;
la réception, par le dispositif terminal via le premier canal de transmission, de premières données envoyées par le dispositif auxiliaire ; et
l'envoi, par le dispositif terminal, de deuxièmes données au dispositif auxiliaire via un deuxième canal de transmission, pour accuser réception des premières données, dans lequel le deuxième canal de transmission est différent du premier canal de transmission.

2. Procédé selon la revendication 1, dans lequel l'envoi, par le dispositif terminal, de deuxièmes données au dispositif auxiliaire via un deuxième canal de transmission comprend : l'envoi, par le dispositif terminal, des deuxièmes données au dispositif auxiliaire via un canal de transmission sans fil à courte distance.

3. Procédé selon la revendication 1 ou 2, dans lequel la réception, par le dispositif terminal via le premier canal de transmission, de premières données envoyées par le dispositif auxiliaire comprend : la réception, par le dispositif terminal via le premier canal de transmission N fois, des premières données envoyées par le dispositif auxiliaire, dans lequel le dispositif terminal est configuré pour répondre une seule fois aux premières données, et N est un entier naturel supérieur à 1 ; et
l'envoi, par le dispositif terminal, de deuxièmes données au dispositif auxiliaire via un deuxième canal de transmission comprend : l'envoi, par le dispositif terminal, de données d'accusé de réception des premières données au dispositif auxiliaire via le canal de transmission sans fil à courte distance une seule fois, dans lequel les données d'accusé de réception sont les deuxièmes données.

4. Procédé selon la revendication 3, dans lequel le canal de transmission sans fil à courte distance est un canal Bluetooth ou un canal ZigBee.

5. Procédé selon la revendication 1, dans lequel le procédé comprend en outre : l'établissement, par le dispositif terminal, du deuxième canal de transmission entre une broche d'émetteur du dispositif terminal et une broche de récepteur du dispositif auxiliaire via une quatrième interface, dans lequel le deuxième canal de transmission est un canal matériel allant du dispositif terminal au dispositif auxiliaire ;
la réception, par le dispositif terminal via le premier canal de transmission, de premières données envoyées par le dispositif auxiliaire comprend : la réception, par le dispositif terminal via le premier canal de transmission M fois, des premières données envoyées par le dispositif auxiliaire, et la réception, par le dispositif terminal via un canal de transmission sans fil à courte distance T fois, des premières données envoyées par le dispositif auxiliaire, dans lequel le dispositif terminal est configuré pour répondre aux premières données une seule fois, M est un entier naturel supérieur à 1, et T est un entier naturel supérieur ou égal à 1 ; et
l'envoi, par le dispositif terminal, de deuxièmes données au dispositif auxiliaire via un deuxième canal de transmission comprend : l'envoi, par le dispositif terminal, de données d'accusé de réception des premières données au dispositif auxiliaire via le deuxième canal de transmission une seule fois, dans lequel les données d'accusé de réception sont les deuxièmes données.

6. Procédé selon l'une quelconque des revendications 1 à 5, dans lequel le procédé comprend en outre :
la détection, par le dispositif terminal, d'un niveau généré par un capteur à effet Hall, dans lequel le capteur à effet Hall est disposé dans le dispositif terminal, une distance entre le capteur à effet Hall et la première interface ou la deuxième interface est inférieure à une distance prédéfinie, un aimant est disposé dans le dispositif auxiliaire, une distance entre l'aimant et la première interface ou la deuxième interface est inférieure à la distance prédéfinie, l'aimant est configuré pour générer une force magnétique, et la force magnétique est destinée à commander le niveau généré par le capteur à effet Hall ;
si le niveau généré par le capteur à effet Hall passe d'un premier niveau à un deuxième niveau, la détermination que le dispositif terminal est connecté au dispositif auxiliaire, dans lequel le premier niveau est supérieur au deuxième niveau ; et
si le niveau généré par le capteur à effet Hall passe du deuxième niveau au premier niveau, la détermination que le dispositif terminal n'est pas connecté au dispositif auxiliaire.

7. Procédé de transmission de données, appliqué à un dispositif auxiliaire, dans lequel le dispositif auxiliaire est connecté à un dispositif terminal via une cinquième interface, une sixième interface et une septième interface, et le procédé comprend :
après qu'il a été détecté, par le dispositif terminal, que le dispositif auxiliaire est connecté au dispositif terminal, la réception, par le dispositif auxiliaire à travers la cinquième interface et la sixième interface, d'une tension d'alimentation délivrée par le dispositif terminal, dans lequel la détection est effectuée à l'aide d'un capteur à effet Hall disposé dans le dispositif terminal et d'un aimant disposé dans le dispositif auxiliaire ;
l'établissement, par le dispositif auxiliaire, d'un premier canal de transmission entre une broche de récepteur du dispositif terminal et une broche d'émetteur du dispositif auxiliaire à travers la septième interface, dans lequel le premier canal de transmission est un canal matériel allant du dispositif auxiliaire au dispositif terminal ;
l'envoi, par le dispositif auxiliaire, de premières données au dispositif terminal à travers le premier canal de transmission ; et
la réception, par le dispositif auxiliaire à travers un second canal de transmission, de secondes données envoyées par le dispositif terminal pour accuser réception des premières données, dans lequel le second canal de transmission est différent du premier canal de transmission.

8. Procédé selon la revendication 7, dans lequel la réception, par le dispositif auxiliaire à travers un second canal de transmission, de secondes données envoyées par le dispositif terminal comprend : la réception, par le dispositif auxiliaire à travers un canal de transmission sans fil à courte distance, des secondes données envoyées par le dispositif terminal.

9. Procédé selon la revendication 7 ou 8, dans lequel l'envoi, par le dispositif auxiliaire, de premières données au dispositif terminal à travers le premier canal de transmission comprend : l'envoi, par le dispositif auxiliaire, des premières données au dispositif terminal à travers le premier canal de transmission N fois, dans lequel le dispositif terminal est configuré pour répondre une fois aux premières données, et N est un entier naturel supérieur à 1 ; et
la réception, par le dispositif auxiliaire à travers un second canal de transmission, de secondes données envoyées par le dispositif terminal comprend : la réception, par le dispositif auxiliaire à travers le canal de transmission sans fil à courte distance, de données d'accusé de réception des premières données envoyées par le dispositif terminal, dans lequel les données d'accusé de réception sont les secondes données, et les données d'accusé de réception sont envoyées une fois.

10. Procédé selon la revendication 9, dans lequel le canal de transmission sans fil à courte distance est un canal Bluetooth ou un canal ZigBee.

11. Procédé selon la revendication 7, le procédé comprenant en outre : l'établissement, par le dispositif auxiliaire, du second canal de transmission entre une broche d'émetteur du dispositif terminal et une broche de récepteur du dispositif auxiliaire à travers une huitième interface, dans lequel le second canal de transmission est un canal matériel allant du dispositif terminal au dispositif auxiliaire ;
l'envoi, par le dispositif auxiliaire, de premières données au dispositif terminal par l'intermédiaire du premier canal de transmission comprend : l'envoi, par le dispositif auxiliaire, des premières données au dispositif terminal par l'intermédiaire du premier canal de transmission M fois, et l'envoi, par le dispositif auxiliaire, des premières données au dispositif auxiliaire par l'intermédiaire d'un canal de transmission sans fil à courte distance T fois, dans lequel le dispositif terminal est configuré pour répondre une fois aux premières données, M est un entier naturel supérieur à 1, et T est un entier naturel supérieur ou égal à 1 ; et
la réception, par le dispositif auxiliaire par l'intermédiaire d'un deuxième canal de transmission, de deuxièmes données envoyées par le dispositif terminal comprend : la réception, par le dispositif auxiliaire par l'intermédiaire du deuxième canal de transmission, de données d'accusé de réception des premières données envoyées par le dispositif terminal, dans laquelle les données d'accusé de réception sont les deuxièmes données.

12. Un dispositif terminal, ayant une première interface, une deuxième interface et une troisième interface, dans lequel le dispositif terminal est connecté à un dispositif auxiliaire par l'intermédiaire de la première interface, de la deuxième interface et de la troisième interface ; et
le dispositif terminal comprend une mémoire et un processeur, dans lequel la mémoire est configurée pour stocker des instructions exécutables par le processeur, et le processeur exécute les instructions pour permettre au dispositif terminal de mettre en œuvre le procédé de transmission de données selon l'une quelconque des revendications 1 à 6.

13. Un dispositif auxiliaire, ayant une cinquième interface, une sixième interface et une septième interface, dans lequel le dispositif auxiliaire est connecté à un dispositif terminal par l'intermédiaire de la cinquième interface, de la sixième interface et de la septième interface ; et
le dispositif auxiliaire comprend une mémoire et un processeur, dans lequel la mémoire est configurée pour stocker des instructions exécutables par le processeur, et le processeur exécute les instructions pour permettre au dispositif auxiliaire de mettre en œuvre le procédé de transmission de données selon l'une quelconque des revendications 7 à 11.

14. Un système de transmission de données, comprenant un dispositif terminal et un dispositif auxiliaire, dans lequel le dispositif terminal a une première interface, une deuxième interface et une troisième interface, et le dispositif auxiliaire a une cinquième interface, une sixième interface et une septième interface ;
la première interface est configurée pour se connecter à la cinquième interface, la deuxième interface est configurée pour se connecter à la sixième interface, et la troisième interface est configurée pour se connecter à la septième interface ;
le dispositif terminal comprend une première mémoire et un premier processeur, la première mémoire est configurée pour stocker des instructions exécutables par le premier processeur, et le premier processeur exécute les instructions pour permettre au dispositif terminal de mettre en œuvre le procédé de transmission de données selon l'une quelconque des revendications 1 à 6 ; et
le dispositif auxiliaire comprend une deuxième mémoire et un deuxième processeur, la deuxième mémoire est configurée pour stocker des instructions exécutables par le deuxième processeur, et le deuxième processeur exécute les instructions pour permettre au dispositif auxiliaire de mettre en œuvre le procédé de transmission de données selon l'une quelconque des revendications 7 à 11.

15. Le système de transmission de données selon la revendication 14, dans lequel la première interface, la deuxième interface, la troisième interface, la cinquième interface, la sixième interface et la septième interface sont des interfaces à broches POGO, le dispositif terminal est une tablette informatique, et le dispositif auxiliaire est un clavier.
